# EUROPÄISCHE PATENTSCHRIFT

(11) **EP 1 899 407 B1**
(45) Veröffentlichungstag und Bekanntmachung des Hinweises auf die Patenterteilung: **02.04.2014**
(21) Anmeldenummer: 06700865.6
(22) Anmeldetag: 19.01.2006
(51) Int. Cl.: C09D 183/14, C08G 77/58

(54) **KONSOLIDIERUNGSMITTEL UND DESSEN VERWENDUNG ZUR HERSTELLUNG VON HYDROLYSESTABILEN FORMKÖRPERN UND BESCHICHTUNGEN**
CONSOLIDATING AGENT AND USE THEREOF FOR THE PRODUCTION OF HYDROLYSIS-STABLE MOLDED MEMBERS AND COATINGS
AGENT DE CONSOLIDATION ET SON UTILISATION POUR PRODUIRE DES CORPS MOULES ET DES REVETEMENTS STABLES A L'HYDROLYSE

(30) Priorität: 20.01.2005 DE 102005002788
(43) Veröffentlichungstag der Anmeldung: 19.03.2008
(73) Patentinhaber: Leibniz-Institut für Neue Materialien gemeinnützige GmbH, 66123 Saarbrücken (DE)
(72) Erfinder: ENDRES, Klaus, 66424 Homburg (DE); REINHARD, Bernd, 66663 Merzig-Brotdorf (DE); SCHMIDT, Helmut, 66130 Saarbrücken-Güdingen (DE)
(74) Vertreter: Patentanwälte Gierlich & Pischitzis Partnerschaft
(86) Internationale Anmeldenummer: PCT/EP2006/000464
(87) Internationale Veröffentlichungsnummer: WO 2006/077124

(56) Entgegenhaltungen:
- EP-A- 0 171 493
- DE-A1- 3 836 815

## Beschreibung

Die Erfindung betrifft ein Konsolidierungsmittel und dessen Verwendung zur Herstellung von hydrolytisch und hydrothermal beständigen Formkörpern und Beschichtungen und die daraus gebildeten Produkte.

Bindemittel sind insbesondere für das Binden von kompakten oder körnigen Produkten von hoher Bedeutung, um daraus Formkörper herzustellen. Ein Problem ist dabei insbesondere die Hydrolysestabilität von Konsolidierungsmitteln, wenn sie aggressiven Bedingungen ausgesetzt sind. Für eine effiziente Anwendung von Bindemitteln ist es nämlich wichtig, dass die Beständigkeit auch unter aggressiven Bedingungen, wie hohen Drücken, hohen Temperaturen, Kontakt mit wässrigen oder korrosiven Medien, wie Säuren oder Basen, möglichst lange aufrechterhalten bleibt, wobei die Bindefestigkeit nicht nennenswert reduziert werden darf. Organischen Polymere als Bindemittel sind diesbezüglich häufig nicht genügend beständig.

Die Herstellung von Kompositwerkstoffen aus partikulären Systemen mit geeigneten Bindemitteln ist auch schwierig, wenn die Kompositwerkstoffe im Vergleich zum bindemittelfreien Produkt nur wenig an Porosität einbüßen sollen. So lassen sich z.B. mit organischen Polymerbindemitteln poröse Komposite herstellen, jedoch zeigt sich, dass es kaum möglich ist, die ursprüngliche Porosität aufrecht zu erhalten. Bei reduziertem Bindemitteleinsatz gelingt es zwar poröse Systeme herzustellen, aufgrund der Eigenschaft der organischen Polymere in Gegenwart von organischen Lösungsmitteln aufzuquellen oder in Lösung zu gehen, sind solche Komposite jedoch für viele Anwendungen, insbesondere bei höheren Temperaturen und in Umgebung organischer Flüssigkeiten, nicht geeignet.

Die Verwendung von rein anorganischen Bindemitteln, die z. B. über den Sol-Gel Prozess zugänglich sind, führt zwar zu einer Bindung, bei der im konsolidierten Formkörper eine entsprechende Porosität aufrecht erhalten wird, jedoch ist das gebundene System sehr spröde, brüchig und gegenüber mechanischen Belastungen wie Scherbelastungen oder starken Druckbelastungen nicht ausreichend widerstandsfähig.

Ferner ist es häufig zweckmäßig, Formkörper unter den Bedingungen herzustellen, unter denen sie später auch angewendet werden. Daher ist es häufig wünschenswert, die konsolidierten Formkörper unter einem erhöhten Druck zu härten. Dies ist bei vielen Konsolidierungsmitteln gar nicht möglich.

Aufgabe der Erfindung war es, Verfahren zur Herstellung konsolidierter Formkörper und von Beschichtungen bereitzustellen, die insbesondere hydrolysestabil und hydrothermal beständig sind, auch unter korrosiven Bedingungen. Auch eine Beibehaltung einer gewünschten Porosität sollte möglich sein. Ferner soll eine gute Bindefestigkeit bei ausreichender Flexibilität erreicht werden. Es wurde auch angestrebt, eine Konsolidierung unter hydrothermalen Bedingungen, d. h. unter erhöhtem Druck und erhöhter Temperatur, zu ermöglichen.

Die Aufgabe wurde gelöst durch die Bereitstellung eines Konsolidierungsmittel zur Herstellung hydrolysestabiler Formkörper oder Beschichtungen, umfassend ein Hydrolysat oder Vorkondensat von
(a) mindestens einem Organosilan der allgemeinen Formel (I)

   RₙSiX₄₋ₙ (I)

   worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3 hat,
(b) mindestens einem hydrolysierbaren Silan der allgemeinen Formel (II)

   SiX₄ (II)

   worin die Reste X die vorstehende Bedeutung haben; und
(c) mindestens einer Metallverbindung der allgemeinen Formel (III)

   MXₐ (III)

   worin M ein Metall der Hauptgruppen I bis VIII oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht; wobei das molare Verhältnis von eingesetzten Siliciumverbindungen zu eingesetzten Metallverbindungen im Bereich von 10.000:1 bis 10:1 liegt.

Der Einsatz von hydrolysierbaren Metallverbindungen der Formel (III) bringt überraschenderweise zwei Vorteile mit sich: Bei Konsolidierungsmitteln, die diese Metallverbindungen enthalten, wurde im Vergleich zu solchen ohne diese Metallverbindung eine besonders gute Hydrolysestabilität und Hydrothermalbeständigkeit der gehärteten Konsolidierungsmittel festgestellt, auch unter aggressiven Bedingungen, wie erhöhter Temperatur und erhöhtem Druck und Kontakt mit aggressiven wässrigen Medien. Es sind somit sogar Langzeitanwendungen unter korrosiver Hydrothermalbelastung möglich. Ein weiterer Vorteil besteht darin, dass Konsolidierungsmittel, die derartige Metalle enthalten, sich auch unter erhöhtem Druck härten lassen.

Geeignete Beispiele für hydrolytisch abspaltbare Gruppen X der obigen Formeln sind Wasserstoff, Halogen (F, Cl, Br oder I, insbesondere Cl oder Br), Alkoxy (z.B. C₁₋₆-Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z.B. bei Si-Polyolkomplexen mit Glycol, Glycerin oder Brenzcatechin. Die genannten Gruppen können gegebenenfalls Substituenten, wie Halogen, Hydroxy, Alkoxy, Amino oder Epoxy, enthalten.

Bevorzugte hydrolytisch abspaltbare Reste X sind Halogen, Alkoxygruppen und Acyloxygruppen. Besonders bevorzugte hydrolytisch abspaltbare Reste sind C₂₋₄-Alkoxygruppen, insbesondere Ethoxy.

Die hydrolytisch nicht abspaltbaren Reste R der Formel (I) sind z.B. Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₄-Alkenyl, wie Vinyl, 1-Propenyl, 2-Propenyl und Butenyl), Alkinyl (z.B. C₂₋₂₀-Alkinyl, insbesondere C₂₋₄-Alkinyl, wie Ethinyl oder Propargyl), Aryl (insbesondere C₆₋₁₀-Aryl, wie Phenyl und Naphthyl) und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl.

Die Reste R können übliche Substituenten aufweisen, bei denen es sich um funktionelle Gruppen handeln kann, über die nach Bedarf auch eine Vernetzung des Kondensats über organische Gruppen möglich ist. Übliche Substituenten sind z.B. Halogen (z.B. Chlor oder Fluor), Epoxid (z.B. Glycidyl oder Glycidyloxy), Hydroxy, Ether, Ester, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Alkoxy, Isocyanato, Aldehyd, Keto, Alkylcarbonyl, Säureanhydrid und Phosphorsäure. Diese Substituenten sind über zweiwertige Brückengruppen, insbesondere Alkylen-, Alkenylen- oder Arylen-Brückengruppen, die durch Sauerstoff- oder -NH-Gruppen unterbrochen sein können, an das Siliciumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich z.B. von den oben genannten einwertigen Alkyl-, Alkenyl- oder Arylresten ab. Natürlich kann der Rest R auch mehr als eine funktionelle Gruppe aufweisen.

Bevorzugte Beispiele für hydrolytisch nicht abspaltbare Reste R mit funktionellen Gruppen, über die eine Vernetzung möglich ist, sind ein Glycidyl- oder ein Glycidyloxy-(C₁₋₂₀)-alkylen-Rest, wie β-Glycidyloxyethyl, γ-Glycidyloxypropyl, δ-Glycidyloxybutyl, s-Glycidyloxypentyl, ω-Glycidyloxyhexyl, und 2-(3,4-Epoxy-cyclohexyl)ethyl, ein (Meth)acryloxy-(C₁₋₆)-alkylen-Rest, z.B. (Meth)acryloxymethyl, (Meth)acryloxyethyl, (Meth)acryloxypropyl oder (Meth)acryloxybutyl, und ein 3-Isocyanatopropylrest. Besonders bevorzugte Reste sind γ-Glycidyloxypropyl und (Meth)acryloxypropyl. Hierbei steht (Meth)acryl für Acryl und Methacryl.

Bevorzugte Reste R, die eingesetzt werden, sind Reste ohne Substituenten oder funktionelle Gruppen, insbesondere Alkylgruppen, vorzugsweise mit 1 bis 4 Kohlenstoffatomen, insbesondere Methyl und Ethyl, sowie Arylreste wie Phenyl.

Beispiele für Organosilane der allgemeinen Formel (I) sind Verbindungen der folgenden Formeln, wobei die Alkylsilane und insbesondere Methyltriethoxysilan besonders bevorzugt sind:
CH₃-SiCl₃, CH₃-Si(OC₂H₅)₃. C₂H₅-SiCl₃, C₂H₅-Si(OC₂H₅)₃, C₃H₇-Si(OC₂H₅)₃, C₆H₅-Si(OC₂H₅)₃, (C₂H₅O)₃-Si-C₃H₆-Cl, (CH₃)₂SiCl₂, (CH₃)₂Si(OC₂H₅)₂, (CH₃)₂Si(OH)₂, (C₆H₅)₂SiCl₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃,

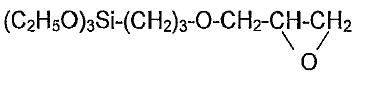

Beispiele für die hydrolysierbaren Silane der allgemeinen Formel (II) sind Si(OCH₃)₄, Si(OC₂H₅)₄, Si(O-n- oder i-C₃H₇)₄, Si(OC₄H₉)₄, SiCl₄, HSiCl₃, Si(OOCCH₃)₄. Von diesen hydrolysierbaren Silanen ist Tetraethoxysilan besonders bevorzugt.

Die Silane lassen sich nach bekannten Methoden herstellen; vgl. W. Noll, "Chemie und Technologie der Silicone", Verlag Chemie GmbH, Weinheim/Bergstraße (1968).

Bei der Metallverbindung der allgemeinen Formel (III)

MXₐ (III)

ist M ein Metall der Hauptgruppen I bis VIII oder der Nebengruppen II bis VIII des Periodensystems der Elemente einschließlich Bor, X wie in Formel (I) definiert, wobei zwei Gruppen X durch eine Oxogruppe ersetzt sein können, und entspricht a der Wertigkeit des Elements.

M ist von Si verschieden. Hier wird Bor auch zu den Metallen gezählt. Beispiele für derartige Metallverbindungen sind Verbindungen von glas- oder keramikbildenden Elementen, insbesondere Verbindungen mindestens eines Elements M aus den Hauptgruppen III bis V und/oder den Nebengruppen II bis IV des Periodensystems der Elemente. Vorzugsweise handelt es sich dabei um hydrolysierbare Verbindungen von Al, B, Sn, Ti, Zr, V oder Zn, insbesondere solche von Al, Ti oder Zr, oder Mischungen aus zwei oder mehreren dieser Elemente. Ebenfalls einsetzbar sind z.B. hydrolysierbare Verbindungen von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthanoiden wie Ce können verwendet werden. Bevorzugt sind Metallverbindungen der Elemente B, Ti, Zr und Al, wobei Ti besonders bevorzugt ist.

Bevorzugte Metallverbindungen sind z. B. die Alkoxide von B, Al, Zr und insbesondere Ti. Geeignete hydrolysierbare Metallverbindungen sind z. B. Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, Ti(OC₂H₅)₄, Ti(O-n-C₃H₇)₄, Ti(O-i-C₃H₇)₄, Ti(OC₄H₉)₄, Ti(2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon- und (Meth)acrylreste, Natriumethanolat, Kaliumacetat, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

In einer besonders bevorzugten Ausführungsform wird das Konsolidierungsmittel unter Verwendung eines Alkylsilans wie Methyltriethoxysilan (MTEOS), eines Arylsilans wie Phenyltriethoxysilan, eines Orthokieselsäureesters wie Tetraethoxysilan (TEOS) und einer Metallverbindung der Formel (III) hergestellt, wobei die Verwendung einer Metallverbindung von B, Al, Zr und insbesondere Ti besonders bevorzugt ist.

Zur Herstellung des Konsolidierungsmittels werden vorzugsweise mindestens 50 Mol-%, bevorzugter mindestens 70 Mol-% und insbesondere mindestens 80 Mol-% Organosilane der Formel (I) mit mindestens einer hydrolytisch nicht abspaltbaren Gruppe verwendet. Der Rest sind hydrolysierbare Verbindungen, insbesondere die hydrolysierbaren Silane der Formel (II), die keine hydrolytisch nicht abspaltbaren Gruppen aufweisen und die Metallverbindungen der Formel (III).

Das molare Verhältnis von eingesetzten Siliciumverbindungen der Formeln (I) und (II) zu eingesetzten Metallverbindungen der Formel (III) liegt im Bereich von 10.000:1 bis 10:1, wobei im Bereich von 2.000:1 bis 20:1 und besonders bevorzugt von 2.000:1 bis 200:1 eine besonders gute Hydrolysestabilität erreicht wird.

Für die Berechnung der molaren Anteile bzw. Verhältnisse, die vorstehend angegeben sind, wird bei den Verbindungen jeweils von den monomeren Verbindungen ausgegangen. Wenn wie nachstehend erläutert bereits vorkondensierte Verbindungen (Dimere usw.) als Ausgangsmaterialien eingesetzt werden, ist auf die entsprechenden Monomere umzurechnen.

Die Hydrolysate oder Vorkondensate des Konsolidierungsmittels werden aus den hydrolysierbaren Silanen und den hydrolysierbaren Metallverbindungen durch Hydrolyse und Kondensation erhalten. Unter Hydrolysaten oder Vorkondensaten werden dabei insbesondere hydrolysierte bzw. zumindest teilweise kondensierte Verbindungen der hydrolysierbaren Ausgangsverbindungen verstanden. Statt der hydrolysierbaren Monomerverbindungen können auch bereits vorkondensierte Verbindungen eingesetzt werden. Derartige, im Reaktionsmedium vorzugsweise lösliche Oligomere können z.B. geradkettige oder cyclische niedermolekulare Teilkondensate (z.B. Polyorganosiloxane) mit einem Kondensationsgrad von z.B. etwa 2 bis 100, insbesondere etwa 2 bis 6, sein.

Die Hydrolysate oder Vorkondensate werden vorzugsweise durch Hydrolyse und Kondensation der hydrolysierbaren Ausgangsverbindungen nach dem Sol-Gel-Verfahren erhalten. Beim Sol-Gel-Verfahren werden die hydrolysierbaren Verbindungen mit Wasser, gegebenenfalls in Gegenwart von sauren oder basischen Katalyse, hydrolysiert und zumindest teilweise kondensiert. Vorzugsweise erfolgt die Hydrolyse und Kondensation in Gegenwart saurer Kondensationskatalysatoren (z.B. Salzsäure, Phosphorsäure oder Ameisensäure) bei einem pH-Wert von vorzugsweise 1 bis 3. Das sich bildende Sol kann durch geeignete Parameter, z.B. Kondensationsgrad, Lösungsmittel oder pH-Wert, auf die für das Konsolidierungsmittel gewünschte Viskosität eingestellt werden.

Weitere Einzelheiten des Sol-Gel-Verfahrens sind z.B. bei CJ. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse und Kondensation können stöchiometrische Wassermengen, aber auch geringere oder größere Mengen verwendet werden. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,65 bis 0,75 Mol Wasser, pro Mol der vorhandenen hydrolysierbaren Gruppen erzielt.

Das erfindungsgemäß verwendete Konsolidierungsmittel liegt insbesondere partikelfrei vor. Vor der Anwendung kann das Konsolidierungsmittel durch Zusatz einer weiteren Wassermenge aktiviert werden.

Das erfindungsgemäße Konsolidierungsmittel eignet sich zum Konsolidieren beliebiger organischer oder anorganischer Feststoffe von Pulver-, Granulat-, Pellet-, Faser- oder ähnlicher partikulärer Form. Dabei kann sich z. B. um sub-µm große Partikel handeln oder auch um Partikel im mm-Bereich und darüber. Andere einsetzbare Festkörper sind z. B. Mikrohohlglaskugeln oder Fasern wie sie z.B. zur Herstellung von Bremsbelägen angewandt werden. Es kommen sowohl natürliche Materialien, die z. B. mineralischer Natur sein können, als auch Metalle oder z. B. künstlich hergestellte Formkörper aus Feinstmetallpulvern, aus keramischen Pulvern, aus Glas oder aus Kombinationen von beiden wie z. B. Glaskeramik oder Cermets in Frage. Das zu konsolidierende partikuläre oder poröse Material wird bevorzugt aus Metallen, Nichtmetallen, Glas, Keramik, Kohlenstoff, Oxiden, Nitriden, Carbiden, Boriden, Mineralien, Kunststoffen, Kunststofffasern, Glasfasern, Mineralfasern, Naturfasern und Holzwerkstoffen ausgewählt. Geeignete Materialien sind z.B. Perlit, Glaskügelchen, Steinmehl, Metallpulver, Graphit, Petrolkoks, Stahlwolle, Vermicullit, Kurzfasern oder Pigmente, wie z.B. TiO₂. Bei den hergestellten Formkörpern kann es sich z.B. um Presslinge oder Gießlinge handeln.

Zur Herstellung von konsolidierten Formkörpern wird das Konsolidierungsmittel mit dem zu konsolidierenden porösen oder partikulären Material vermengt, z.B. durch Einrühren, Mischen oder Einpumpen, und anschließend wird das mit dem porösen oder partikulären Material vermischte Konsolidierungsmittel gehärtet. Die eigentliche Konsolidierung (Härtung) kann z. B. thermisch durch Zufuhr von Wärme erfolgen. Eine andere Art der Härtung ist die Zufuhr von Kondensationskatalysatoren, die eine Vernetzung der anorganisch vernetzbaren SiOH-Gruppen oder Metall-OH-Gruppen unter Bildung eines anorganischen Netzwerkes katalysieren. Hierfür geeignete Kondensationskatalysatoren sind z. B. Basen, aber auch Fluoridionen oder Alkoxide. Bei Verwendung von Ausgangsverbindungen mit polymerisierbaren oder polykondensierbaren Gruppen wie z. B. Methacryloxygruppen oder Epoxidgruppen kann der Polymerisations-, Polyadditions- oder Polykondensationsprozess durch Zugabe thermischer Initiatoren oder Radikalstarter initiiert werden.

Die Konsolidierung (Härtung) kann in einer bevorzugten Ausführungsform unter erhöhter Temperatur und erhöhtem Druck, bezogen auf die Normalbedingungen, erfolgen, d.h. der Druck ist größer als 1 bar und die Temperatur ist höher als 20°C. Das Konsolidierungsmittel kann auch bei einer Temperatur von mindestens 40°C und einem Druck von mindestens 5 bar gehärtet werden. Eine Härtung kann dabei bis zu Temperaturen von 200°C und Drücken von bis 500 bar vorgenommen werden.

Es ist bekannt, dass eine thermische Härtung von Konsolidierungsmitteln unter Umgebungsdruck recht unproblematisch ist. Durch das kontinuierliche Entfernen des Lösungsmittels und des Reaktionsproduktes Wasser aus der Mischung von Bindemittelsol und zu konsolidierendem Material kommt es zu einer fortschreitenden Kondensationsreaktion. Im weiteren thermischen Härtungsprozess wird das Konsolidierungsmittel auf dem zu verfestigenden Material verdichtet.

Die Eigenschaften von konsolidierten Materialien hängen aber auch von den Bedingungen ab, unter denen sie hergestellt werden. In der Regel erhält man ein verbessertes Verhalten der konsolidierten Materialien, wenn sie bei etwa den gleichen Bedingungen hergestellt werden, bei denen sie eingesetzt werden sollen. Für Anwendungen von konsolidierten Materialien bei erhöhten Drücken und Temperaturen ist es daher wünschenswert, auch die Herstellung unter etwa den gleichen Bedingungen durchzuführen. Dies ist aber für die Konsolidierungsmittel nach dem Stand der Technik problematisch, da bei einer Härtung von Konsolidierungsmitteln nach dem Stand der Technik bei erhöhtem Druck und erhöhter Temperatur, d. h. unter Hydrothermalbedingungen, Lösungsmittel und Reaktionsprodukte im System verbleiben und lediglich eine Gleichgewichtseinstellung ermöglichen. Die Gleichgewichtslage unter diesen Bedingungen liefert jedoch keine verfestigten bzw. konsolidierten Materialien.

Es wurde überraschenderweise festgestellt, dass die Gleichgewichtslage durch den Einsatz der Metallverbindungen der Formel (III) verändert wird, so dass ein Abbinden des eingesetzten Konsolidierungsmittels unter Hydrothermalbedingungen (erhöhtem Druck und erhöhter Temperatur) möglich wurde. Auf diese Weise können konsolidierte Formkörper oder Beschichtungen unter Hydrothermalbedingungen erhalten werden, wobei die konsolidierten Formkörper und Beschichtungen gute Bindefestigkeiten bei ausreichender Flexibilität aufweisen.

Die Härtung des Konsolidierungsmittels unter Hydrothermalbedingungen kann auch durch Zugabe von Anhydriden zum Konsolidierungsmittel unterstützt werden. Mit Hilfe der Anhydride können Kondensationsprodukte wie Wasser und Ethanol abgefangen werden. Bei den Anhydriden handelt es sich bevorzugt um Anhydride von organischen Säuren oder Mischungen von diesen Anhydriden. Beispiele sind Essigsäureanhydrid, Methylnadinsäureanhydrid, Phthalsäureanhydrid, Bernsteinsäureanhydrid sowie Mischungen davon.

Bei der Zugabe von Anhydriden ist es bevorzugt, z.B. cyclische Kohlensäureester, wie Propylencarbonat, oder Dicarbonsäureester, wie Glutarsäuredimethylester, Adipinsäuredimethylester und Bernsteinsäuredimethylester, oder Dicarbonsäuredimethylester-Mischungen aus den genannten Estern, als Lösungsmittel zu verwenden. In der Regel kann hierfür das geeignete Lösungsmittel durch das bei der Herstellung des Konsolidierungsmittels verwendete oder gebildete Lösungsmittel vollständig oder teilweise ausgetauscht werden. Neben dem Lösungsmittelaustausch ist es auch möglich, schon bei Herstellung des Konsolidierungsmittels ein bevorzugtes Lösungsmittel einzusetzen.

Die Härtung von zu konsolidierenden Formkörpern ist somit unter Hydrothermalbedingungen möglich.

Da unter Hydrothermalbedingungen ein Verdichtungsprozeß des gelierten Konsolidierungsmittels teilweise oder ganz verhindert wird, kann das Konsolidierungsmittelgel die Poren großvolumig verschließen. Sofern ein poröser Formkörper erhalten werden sollen, kann dies bevorzugt durch Durchleiten eines festen oder flüssigen Mediums in den zu konsolidierenden Formkörper, der mit dem Konsolidierungsmittel vermengt ist, erreicht werden. Dadurch kann die Porosität in der gewünschten Weise eingestellt werden. Die Einleitung erfolgt insbesondere vor oder während des Härtungsvorgangs über einen bestimmten Zeitraum.

Parameter für das Durchpumpen, wie Dauer, Zeitpunkt, Menge oder Durchflussgeschwindigkeit der flüssigen oder gasförmigen Phase, können vom Fachmann ohne weiteres in geeigneter Weise gewählt werden, um die gewünschte Porosität einzustellen. Die Einleitung kann z.B. vor oder nach einer teilweisen Härtung erfolgen, wobei nach und/oder während der Einleitung eine vollständige Aushärtung erfolgt. Zur Einleitung eines flüssigen oder gasförmigen Mediums können z.B. ein inertes Lösungsmittel oder Gas, z. B. N₂; CO₂ oder Luft, eingepumpt werden, wodurch die Porenvolumina freigespült und Reaktionsprodukte abgeführt werden. Als Beispiele für Lösungsmittel für das flüssige Medium kann auf die vorstehend aufgeführten verwiesen werden. Das flüssige oder gasförmige Medium kann gegebenenfalls Katalysatoren und/oder Gas freisetzende Komponenten enthalten bzw. damit beladen sein. Die gasförmigen oder flüssigen Medien, die durch den Formkörper oder die Beschichtung geleitet werden, können z.B. mit einem Härtungskatalysator beladen werden, so dass er dem zu härtenden Formkörper zugeführt wird. Der Katalysator ist dabei bevorzugt flüchtig, gasförmig oder verdampfbar, kann gelöste Stoffe wie beispielsweise Zirkoniumoxychlorid enthalten und in Form eines Gradienten zum Bindemittel zudosiert werden.

Poröse konsolidierte Formkörper können z.B. einen Porositätsgrad (Verhältnis von Volumen der Poren zum Gesamtvolumen des Formkörpers) von 5 bis 50% aufweisen. Natürlich können auch im wesentlichen unporöse Formkörper erhalten werden.

Das erfindungsgemäße Konsolidierungsmittel ermöglicht aufgrund seiner chemischen Konstitution eine schnelle und wirksame Verfestigung. In diesem Zusammenhang hat sich der Einsatz von Phenylsilanalkoxiden besonders bewährt. Dies beruht vermutlich darauf, dass diese Verbindungen aufgrund der sterischen Hinderung der Phenylgruppe und der elektronischen Effekte nicht rasch abreagierbare OH-Gruppen aufweisen, die sich besonders gut mit der Oberfläche von anorganischen Materialien verbinden.

Untersuchungen haben gezeigt, dass die erfindungsgemäß hergestellten Formkörper auch im Autoklaven bei hohem Druck und hoher Temperatur auch über einen längeren Zeitraum nicht abgebaut werden und auch unter diesen Bedingungen weiterhin eine stabile Bindung bilden. Auch die Porosität wird nicht oder nur in geringem Maß reduziert.

Neben der Herstellung von Formkörpern kann das Konsolidierungsmittel auch als Beschichtungszusammensetzung eingesetzt werden. Es kann so wie es ist auf jede übliche Weise auf ein Substrat aufgetragen werden und dann in üblicher Weise gehärtet werden. Die Härtung kann entsprechend den Angaben für den Formkörper erfolgen. Es können alle üblichen Substrate verwendet werden, z.B. Glas, Metall, Keramik, Bausteine, Zement oder andere Baumaterialien oder Holz. Ferner kann ein mit den vorstehend erläuterten porösen oder partikuläres Materialien vermengtes Konsolidierungsmaterial als Beschichtungsmittel verwendet werden, so dass eine Kompositbeschichtung erhalten wird.

Die erfindungsgemäßen konsolidierten Formkörper und beschichteten Substrate können z.B. als hydrolysestabile, chemikalienresistente Auskleidung von Reaktoren, als Speichersystem für Wasserstoff oder andere Brennstoffe oder als Speichersystem für phasenwechselnde Feststoffe eingesetzt werden. Ein anderes Einsatzgebiet ist die Herstellung von Bremsbelägen.

Die folgenden Beispiele erläutern die Erfindung.

### Beispiele

Herstellung von partikelfreien Konsolidierungsmitteln und deren Verwendung zur Herstellung von hydrolysebeständigen Formkörpern und Schichten:

### a) Konsolidierungsmittel MTTi_{0,1}-TiOSO₄MT 04

52,4 g MTEOS, 15,28 g TEOS und 0,174 g Titantetraisopropoxid wurden gemischt und unter starkem Rühren mit 0,285 g Titanoxosulfat-Schwefelsäure-Komplex, der zuvor in 16,81 g entionisiertem Wasser gelöst wurde, zur Reaktion gebracht. Nach dem Umschlagspunkt überschritt das Reaktionsgemisch ein Temperaturmaximum von 69°C. Nach Abkühlen der Reaktionsmischung auf 54°C wurde eine weitere Silanmischung, die aus 52,4 g MTEOS und 15,28 g TEOS besteht, zum Ansatz gegeben und noch 5 Minuten weitergerührt. Nach Stehen über Nacht ist der Binder zur weiteren Verarbeitung geeignet. Der pH-Wert kann je nach Anforderungen im Bereich zwischen pH 0 und 7 eingestellt werden.

Hierzu wurden z.B. 225 g einer Mischung aus Graphit, Petrolkoks, Stahlwolle und Vermicullit mit 100 g des obigen Bindemittels, das zuvor durch Zugabe von 5 g entionisiertem Wasser aktiviert wurde, vermischt, in eine Pressform (10 x 10 x 1 cm³) gefüllt und in einer Heißpresse bei einem Pressdruck von 20 MPa verdichtet und innerhalb der ersten 15 Minuten bei 70°C und für weitere 15 Minuten bei 120°C gehärtet. Nach der Entformung wurden die Formkörper über Nacht bei 120°C nachgehärtet. Die erhaltenen Formkörper zeigen Scherfestigkeiten im Bereich von 350 bis 500 N/cm².

### b) Konsolidierungsmittel MTTi_{0,1}P₃ 06

26,2 g MTEOS, 7,64 g TEOS und 0,087 g Titantetraisopropoxid wurden gemischt und unter starkem Rühren mit 12,63 g entionisiertem Wasser und 0,088 ml konzentrierter Salzsäure (37%) zur Reaktion gebracht. Nach dem Umschlagspunkt überschritt das Reaktionsgemisch ein Temperaturmaximum von 62°C. Nach Abkühlen der Reaktionsmischung auf 47°C wurde eine weitere Silanmischung, die aus 26,45 g Phenyltriethoxysilan, 6,54 g MTEOS und 7,64 g TEOS besteht, zum Ansatz gegeben und noch 5 Minuten weitergerührt. Nach Stehen über Nacht ist der Binder zur weiteren Verarbeitung geeignet. Der pH-Wert kann je nach Anforderungen im Bereich zwischen pH 0 und 7 eingestellt werden.

Zu 9 g Pigment TiO₂ (DuPont R 931) wurden 17 g des obigen Bindemittels zugesetzt. Die Mischung wird mit einem Ultratorax homogenisiert und mittels Schleuderbeschichten auf Substrate aus Edelstahl oder Glas appliziert. Die Trocknung der Schicht erfolgte zunächst bei 70°C für 30 min. Anschließend erfolgte der Einbrand bei 500°C für 10 min. Die Schicht erweist sich als außerordentlich hydrolysestabil nach 16-stündiger Einlagerung in 0,1 N NaOH-Lösung.

## Patentansprüche

1. Verwendung eines Konsolidierungsmittels, umfassend ein Hydrolysat oder Vorkondensat von
(a) mindestens einem Organosilan der allgemeinen Formel (I)
RnSiX₄₋ₙ (I)
worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1 , 2 oder 3 hat,
(b) mindestens einem hydrolysierbaren Silan der allgemeinen Formel (II)
SiX₄ (II)
worin die Reste X die vorstehende Bedeutung haben; und
(c) mindestens einer Metallverbindung der allgemeinen Formel (III)
MXₐ (III)
worin M ein Metall der Hauptgruppen I bis VIII oder der Nebengruppen II bis VIII des Periodensystems der Elemente einschließlich Bor ist, X wie in Formel (I) definiert ist, wobei zwei Gruppen X durch eine Oxogruppe ersetzt sein können, und a der Wertigkeit des Elements entspricht;
wobei das molare Verhältnis von eingesetzten Siliciumverbindungen zu eingesetzten Metallverbindungen im Bereich von 10.000:1 bis 10:1 liegt, zur Konsolidierung von porösem oder partikulärem Material für die Herstellung hydrolysestabiler Formkörper und Beschichtungen.

2. Verwendung nach Anspruch 1, **dadurch gekennzeichnet, dass** das Metall der Metallverbindung der allgemeinen Formel (III) aus B, AI, Zr und insbesondere Ti ausgewählt wird.

3. Verwendung nach einem der Ansprüche 1 bis 2, **dadurch gekennzeichnet, dass** das Konsolidierungsmittel ein Hydrolysat oder Vorkondensat von (a1) einem Alkylsilan, (a2) einem Arylsilan, (b) einem Ortriokieselsäureester und (c) einem Metallalkoxylat umfasst.

4. Verwendung nach einem der Ansprüche 1 bis 3, **dadurch gekennzeichnet, dass** das Konsolidierungsmittel nach dem Sol-Gel-Verfahren mit einer unterstöchiometrischen Wassermenge, bezogen auf die vorhandenen hydrolysierbaren Gruppen, hergestellt wird.

5. Verwendung nach einem der Ansprüche 1 bis 4, **dadurch gekennzeichnet, dass** das Konsolidierungsmittel partikelfrei vorliegt.

6. Verfahren zur Herstellung von hydrolysestabilen konsolidierten Formkörpern, **dadurch gekennzeichnet, dass** man ein Konsolidierungsmittel nach einem der Ansprüche 1 bis 5 mit einem zu konsolidierenden porösen oder partikulären Material vermengt und das Konsolidierungsmittel härtet.

7. Verfahren nach Anspruch 6, **dadurch gekennzeichnet, dass** das Konsolidierungsmittel unter erhöhtem Druck und erhöhter Temperatur gehärtet wird.

8. Verfahren nach Anspruch 7, **dadurch gekennzeichnet, dass** das Konsolidierungsmittel bei einer Temperatur von mindestens 40°C und einem Druck von mindestens 5 bar gehärtet wird.

9. Verfahren nach einem der Ansprüche 6 bis 8, **dadurch gekennzeichnet, dass** zu konsolidierende Material aus Metallen, Nichtmetallen, Glas, Keramik, Kohlenstoff, Oxiden, Nitriden, Carbiden, Boriden, Mineralien, Kunststoffen, Kunststofffasern, Glasfasern, Mineralfasern, Naturfasern und Holzwerkstoffen ausgewählt wird.

10. Verfahren nach einem der Ansprüche 6 bis 9 , **dadurch gekennzeichnet, dass** vor und/oder während der Härtung für einen bestimmten Zeitraum ein flüssiges oder gasförmiges Medium, insbesondere Luft, durch den zu konsolidierenden Formkörper, der mit dem Konsolidierungsmittel vermengt ist, geleitet wird, um die Porosität einzustellen.

11. Verfahren zur Herstellung von hydrolysestabilen konsolidierten Beschichtungen, **dadurch gekennzeichnet, dass** man als Beschichtungsmittel ein Konsolidierungsmittel nach einem der Ansprüche 1 bis 5 mit einem zu konsolidierenden porösen oder partikulären Material vermengt, auf ein Substrat aufträgt und das Konsolidierungsmittel härtet.

12. Verfahren nach Anspruch 11, **dadurch gekennzeichnet, dass** das Konsolidierungsmittel unter erhöhtem Druck und erhöhter Temperatur gehärtet wird.

13. Verfahren nach Anspruch 12, **dadurch gekennzeichnet, dass** das Konsolidierungsmittel bei einer Temperatur von mindestens 40°C und einem Druck von mindestens 5 bar gehärtet wird.

14. Hydrolysestabiler Formkörper, erhältlich nach einem Verfahren der Ansprüche 6 bis 10.

15. Hydrolysestabil beschichtetes Substrat, erhältlich nach einem Verfahren der Ansprüche 11 bis 13.

## Claims

1. Use of a consolidant comprising a hydrolysate or precondensate of
(a) at least one organosilane of the general formula (I)
RₙSiX₄₋ₙ (I)
in which the R radicals are the same or different and are groups not eliminable by hydrolysis, the X radicals are the same or different and are groups eliminable by hydrolysis or hydroxyl groups, and n is 1, 2 or 3,
(b) at least one hydrolysable silane of the general formula (II)
SiX₄ (II)
in which the X radicals are each as defined above; and
(c) at least one metal compound of the general formula (III)
MXₐ (III)
in which M is a metal of main groups I to VIII or of transition groups II to VIII of the Periodic Table of the Elements including boron, X is as defined in formula (I), where two X groups may be replaced by one oxo group, and a corresponds to the valency of the element;
where the molar ratio of silicon compounds used to metal compounds used is in the range from 10 000:1 to 10:1, for consolidating porous or particulate material for producing hydrolysis-stable molding bodies and coatings.

2. Use according to Claim 1, **characterized in that** the metal of the metal compound of the general formula (III) is selected from B, Al, Zr and especially Ti.

3. Use according to one of Claims 1 and 2, **characterized in that** the consolidant comprises a hydrolysate or precondensate of (a1) an alkylsilane, (a2) an arylsilane, (b) an orthosilicic ester and (c) a metal alkoxylate.

4. Use according to one of Claims 1 to 3, **characterized in that** the consolidant is prepared by the sol-gel process with a substoichiometric amount of water based on the hydrolysable groups present.

5. Use according to one of Claims 1 to 4, **characterized in that** the consolidant is present in particle-free form.

6. Process for producing hydrolysis-stable consolidated molding bodies, **characterized in that** a consolidant according to one of Claims 1 to 5 is mixed with a porous or particulate material to be consolidated and the consolidant is cured.

7. Process according to Claim 6, **characterized in that** the consolidant is cured under elevated pressure and elevated temperature.

8. Process according to Claim 7, **characterized in that** the consolidant is cured at a temperature of at least 40°C and a pressure of at least 5 bar.

9. Process according to one of Claims 6 to 8, **characterized in that** the material to be consolidated is selected from metals, nonmetals, glass, ceramic, carbon, oxides, nitrides, carbides, borides, minerals, plastics, plastics fibers, glass fibers, mineral fibers, natural fibers and wood materials.

10. Process according to one of Claims 6 to 9, **characterized in that**, before and/or during the curing, a liquid or gaseous medium, especially air, is passed through the molding body to be consolidated, which is mixed with the consolidant, for a particular period in order to establish the porosity.

11. Process for producing hydrolysis-stable consolidated coatings, **characterized in that** a consolidant according to one of Claims 1 to 5 is mixed with a porous or particulate material to be consolidated and applied to a substrate as a coating material, and the consolidant is cured.

12. Process according to Claim 11, **characterized in that** the consolidant is cured under elevated pressure and elevated temperature.

13. Process according to Claim 12, **characterized in that** the consolidant is cured at a temperature of at least 40°C and a pressure of at least 5 bar.

14. Hydrolysis-stable molding body obtainable by a process of Claims 6 to 10.

15. Substrate with a hydrolysis-stable coating, obtainable by a process of Claims 11 to 13.

## Revendications

1. Utilisation d'un agent de consolidation, comprenant un hydrolysat ou un précondensat de
(a) au moins un organosilane de formule générale (I)
RₙSiX₄₋ₙ (I)
dans laquelle les radicaux R sont identiques ou différents et représentent des groupes non clivables par hydrolyse, les radicaux X sont identiques ou différents et représentent des groupes clivables par hydrolyse ou des groupes hydroxy, et n a la valeur 1, 2 ou 3,
(b) au moins un silane hydrolysable de formule générale (II)
SiX₄ (II)
dans laquelle les radicaux X ont la signification précédente ; et
(c) au moins un composé métallique de formule générale (III)
MXₐ (III)
dans laquelle M représente un métal des groupes principaux I à VIII ou des groupes de transition II à VIII du tableau périodique des éléments, y compris le bore, X est défini comme dans la Formule (I), deux groupes X pouvant être remplacés par un groupe oxo, et a correspond à la valence de l'élément ;
le rapport molaire entre les composés de silicium utilisés et les composés métalliques utilisés se situant dans la plage allant de 10 000:1 à 10:1, pour la consolidation d'un matériau poreux ou particulaire pour la fabrication de corps moulés et de revêtements stables à l'hydrolyse.

2. Utilisation selon la revendication 1, **caractérisée en ce que** le métal du composé métallique de formule générale (III) est choisi parmi B, Al, Zr et notamment Ti.

3. Utilisation selon l'une quelconque des revendications 1 à 2, **caractérisée en ce que** l'agent de consolidation comprend un hydrolysat ou un précondensat de (a1) un alkylsilane, (a2) un arylsilane, (b) un ester de l'acide orthosilicique et (c) un alcoxylate métallique.

4. Utilisation selon l'une quelconque des revendications 1 à 3, **caractérisée en ce que** l'agent de consolidation est fabriqué par un procédé sol-gel avec une quantité d'eau sous-stoechiométrique, par rapport aux groupes hydrolysables présents.

5. Utilisation selon l'une quelconque des revendications 1 à 4, **caractérisée en ce que** l'agent de consolidation est exempt de particules.

6. Procédé de fabrication de corps moulés consolidés stables à l'hydrolyse, **caractérisé en ce qu'**un agent de consolidation selon l'une quelconque des revendications 1 à 5 est mélangé avec un matériau poreux ou particulaire à consolider et l'agent de consolidation est durci.

7. Procédé selon la revendication 6, **caractérisé en ce que** l'agent de consolidation est durci sous pression élevée et température élevée.

8. Procédé selon la revendication 7, **caractérisé en ce que** l'agent de consolidation est durci à une température d'au moins 40 °C et une pression d'au moins 5 bar.

9. Procédé selon l'une quelconque des revendications 6 à 8, **caractérisé en ce que** le matériau à consolider est choisi parmi les métaux, les non-métaux, le verre, la céramique, le carbone, les oxydes, les nitrures, les carbures, les borures, les minéraux, les plastiques, les fibres de plastique, les fibres de verre, les fibres minérales, les fibres naturelles et les matériaux à base de bois.

10. Procédé selon l'une quelconque des revendications 6 à 9, **caractérisé en ce qu'**avant et/ou pendant le durcissement, un milieu liquide ou gazeux, notamment de l'air, est conduit au travers du corps moulé à consolider mélangé avec l'agent de consolidation pendant un certain temps, afin d'ajuster la porosité.

11. Procédé de fabrication de revêtements consolidés stables à l'hydrolyse, **caractérisé en ce qu'**un agent de consolidation selon l'une quelconque des revendications 1 à 5 est mélangé avec matériau poreux ou particulaire à consolider en tant qu'agent de revêtement, appliqué sur un substrat et l'agent de consolidation est durci.

12. Procédé selon la revendication 11, **caractérisé en ce que** l'agent de consolidation est durci sous pression élevée et température élevée.

13. Procédé selon la revendication 12, **caractérisé en ce que** l'agent de consolidation est durci à une température d'au moins 40 °C et une pression d'au moins 5 bar.

14. Corps moulé stable à l'hydrolyse, pouvant être obtenu par un procédé selon les revendications 6 à 10.

15. Substrat revêtu stable à l'hydrolyse, pouvant être obtenu par un procédé selon les revendications 11 à 13.
